# EUROPÄISCHE PATENTSCHRIFT

(11) **EP 4 416 528 B1**
(45) Veröffentlichungstag und Bekanntmachung des Hinweises auf die Patenterteilung: **18.11.2026**
(21) Anmeldenummer: 22783336.5
(22) Anmeldetag: 20.09.2022
(51) Int. Cl.: G01S 19/39, G01S 19/20, G01S 19/14, G01S 19/48

(54) **SYSTEM, VERFAHREN UND SOFTWARE ZUM STEUERN EINER FAHRASSISTENZFUNKTION**
SYSTEM, METHOD, AND SOFTWARE FOR CONTROLLING A DRIVER ASSISTANCE FUNCTION
SYSTÈME, PROCÉDÉ ET LOGICIEL POUR COMMANDER UNE FONCTION D'AIDE À LA CONDUITE

(30) Priorität: 14.10.2021 DE 102021126714
(43) Veröffentlichungstag der Anmeldung: 21.08.2024
(73) Patentinhaber: Bayerische Motoren Werke Aktiengesellschaft, 80809 München (DE)
(72) Erfinder: KROPP, Victoria, 80999 München (DE)
(86) Internationale Anmeldenummer: PCT/EP2022/076071
(87) Internationale Veröffentlichungsnummer: WO 2023/061708

(56) Entgegenhaltungen:
- US-A1- 2010 225 533
- US-A1- 2019 317 225
- WANG XIANKUN ET AL: "A Survey on Integrity Monitoring of GNSS Navigation for Ground Vehicles", GNSS 2021 - PROCEEDINGS OF THE 34TH INTERNATIONAL TECHNICAL MEETING OF THE SATELLITE DIVISION OF THE INSTITUTE OF NAVIGATION (ION GNSS+ 2021), THE INSTITUTE OF NAVIGATION, 8551 RIXLEW LANESUITE 360MANASSAS, VA 20109, USA, 24 September 2021 (2021-09-24), pages 2591 - 2601, XP056016680

## Beschreibung

Die Erfindung betrifft ein System und ein Verfahren zum Steuern einer Fahrassistenzfunktion eines Fahrzeugs. Darüber hinaus betrifft die Erfindung eine Software mit Programmcode zur Durchführung eines solchen Verfahrens, wenn die Software auf einer softwaregesteuerten Verarbeitungseinrichtung abläuft.

Die Erfindung kann insbesondere im Rahmen eines Fahrassistenzsystems (FAS) eingesetzt werden, wobei die Längs- und/oder Querführung des Fahrzeugs in der Weise geregelt wird, dass eine durch das FAS vorgegebene Fahraufgabe erfüllt wird. Dabei kann das FAS ein wenigstens teilweise automatisiertes Fahren, ggf. bis hin zum vollautomatisierten Fahren, ermöglichen.

Unter dem Begriff "automatisiertes Fahren" wird im Rahmen des Dokuments ein Fahren mit automatisierter Längs- und/oder Querführung verstanden. Beim automatisierten Fahren kann es sich beispielsweise um ein zeitlich längeres Fahren auf der Autobahn oder im urbanen Umfeld oder um ein zeitlich begrenztes Fahren im Rahmen des Einparkens handeln. Der Begriff "automatisiertes Fahren" umfasst automatisiertes Fahren mit einem beliebigen Automatisierungsgrad. Beispielhafte Automatisierungsgrade sind assistiertes, teilautomatisiertes, hochautomatisiertes, vollautomatisiertes und autonomes Fahren (mit jeweils zunehmendem Automatisierungsgrad). Die vorstehend genannten fünf Automatisierungsgrade entsprechen den SAE-Leveln 1 bis 5 der Norm SAE J3016 (SAE - Society of Automotive Engineering). Beim assistierten Fahren (SAE-Level 1) führt das System die Längs- oder Querführung in bestimmten Fahrsituationen durch. Beim teilautomatisierten Fahren (SAE-Level 2) übernimmt das System die Längs- und Querführung in bestimmten Fahrsituationen, wobei der Fahrer das System wie beim assistierten Fahren dauerhaft überwachen muss. Beim hochautomatisierten Fahren (SAE-Level 3) übernimmt das System die Längs- und Querführung in bestimmten Fahrsituationen, ohne dass der Fahrer das System dauerhaft überwachen muss; der Fahrer muss aber innerhalb einer gewissen Zeit in der Lage sein, die Fahrzeugführung auf Anforderung durch das System zu übernehmen. Beim vollautomatisierten Fahren (SAE-Level 4) übernimmt das System die Fahrzeugführung in bestimmten Fahrsituationen, selbst wenn der Fahrer auf eine Anforderung zum Eingreifen nicht reagiert, so dass der Fahrer als Rückfallebene entfällt. Beim autonomen Fahren (SAE-Level 5) können vom System alle Aspekte der dynamischen Fahraufgabe unter jeder Fahrbahn- und Umgebungsbedingung durchgeführt werden, welche auch von einem menschlichen Fahrer beherrscht werden. Der SAE-Level 5 entspricht somit einem fahrerlosen Fahren, bei dem das System während der ganzen Fahrt alle Situationen wie ein menschlicher Fahrer automatisch bewältigen kann; ein Fahrer ist generell nicht mehr erforderlich.

Einige Fahrassistenzfunktionen erfordern die Kenntnis einer genauen Position des Fahrzeugs. Die Position kann in Längs- und/oder Querrichtung bestimmt und bezüglich eines vorbestimmten Referenzpunkts ausgedrückt werden. Eine relative Position des Fahrzeugs kann beispielsweise in Querrichtung bezüglich einer erkannten Fahrspurmarkierung angegeben werden. Eine absolute geographische Position kann beispielsweise anhand von Karteninformationen bezüglich eines vorbestimmten geodätischen Referenzsystems wie dem WGS84 bestimmt werden.

Die Bestimmung der Position des Fahrzeugs unterliegt üblicherweise einer Reihe von Fehlern und Ungenauigkeiten. Sensoren stellen beispielsweise verrauschte und/oder verfälschte Informationen bereit oder können gelegentlich ganz ausfallen. Unterschiedliche Messbedingungen oder komplexe Verarbeitungsheuristiken führen zu unterschiedlich genauen oder verlässlichen Bestimmungen.

Um eine möglichst genaue und verlässliche Bestimmung der Position des Fahrzeugs zu ermöglichen, können mehrere, bevorzugt statistisch unabhängige Quellen von Positionsinformationen für eine statistische Schätzung der Fahrzeugposition verwendet werden. Die verschiedenen Positionsinformationen können beispielsweise auf einer kamerabasierten Erfassung von Fahrspurbegrenzungen, auf einer LiDAR-basierten Erfassung von Objekten, auf einer odometriebasierten Prädiktion und/oder auf einem Globalen Navigationssatellitensystem (GNSS - Global Navigation Satellite System), wie z.B. GPS, GLONASS, Galileo oder Beidou, beruhen. Die mehreren Positionsinformationen aus den unterschiedlichen Quellen können sodann zu einer geschätzten Fahrzeugposition kombiniert werden. Dabei kann man auf gängige Algorithmen der Sensordatenfusion, die dem Fachmann an sich bekannt sind, zurückgreifen, wie z.B. Kalman-Filtertechniken.

Wenn GNSS-basierte Positionsinformationen zum Steuern einer Fahrassistenzfunktion herangezogen werden, ist zu beachten, dass die an einem GNSS-Empfänger des Fahrzeugs ankommenden Satellitensignale im Allgemeinen in Folge verschiedener Umgebungseffekte, wie z.B. Interferenzen, eine Degradation erfahren. Fehlerquellen wie Mehrwegeausbreitung und ionosphärische Störungen haben einen großen Einfluss auf die Nutzbarkeit der GNSS-Signale und verringern damit die Verfügbarkeit und Genauigkeit der GNSS-basierten Positionsinformationen. Darüber hinaus können Komponenten, die für die Bestimmung und Berechnung der Fahrzeugposition genutzt werden, wie z.B. ein GNSS-Empfänger und eine Inertialsensorik, zusätzliche Fehlerquellen darstellen. Im Ergebnis kann durch derartige Fehlereinflüsse bei der Fahrzeugpositionsbestimmung die Verfügbarkeit der Fahrassistenzfunktion eingeschränkt werden.

Die US 2019/317225 A1 beschreibt ein Verfahren zur satellitengestützten Bestimmung einer Fahrzeugposition das folgende Schritte aufweist: Empfangen von GNSS-Satellitendaten; Bestimmen einer Fahrzeugposition mit den empfangenen GNSS-Satellitendaten; Bereitstellen von Eingangsgrößen, die sich auf die Genauigkeit der bestimmten Fahrzeugposition auswirken können; Ermitteln einer Positionsgenauigkeit der bestimmten Fahrzeugposition unter Verwendung eines Algorithmus, der einer Fahrzeugposition eine Positionsgenauigkeit zuweist; und Anpassen des Algorithmus.

Es ist eine Aufgabe der vorliegenden Erfindung, eine verbesserte Steuerung einer Fahrassistenzfunktion in Abhängigkeit von GNSS-Signalen bereitzustellen.

Die Aufgabe wird durch ein System und ein Verfahren gemäß den unabhängigen Patentansprüchen gelöst. Vorteilhafte Ausführungsformen sind in den abhängigen Ansprüchen angegeben.

Ein erster Aspekt der Erfindung betrifft ein System zum Steuern einer Fahrassistenzfunktion. Bei dem System kann es sich insbesondere um ein Fahrassistenzsystem (FAS) eines Fahrzeugs, insbesondere eines Kraftfahrzeugs, oder um ein Teilsystem eines solchen FAS handeln. Unter dem Begriff Kraftfahrzeug soll dabei insbesondere ein Landfahrzeug, das durch Maschinenkraft bewegt wird, ohne an Bahngleise gebunden zu sein, verstanden werden. Ein Kraftfahrzeug in diesem Sinne kann z.B. als Kraftwagen, Kraftrad oder Zugmaschine ausgebildet sein.

Die Fahrassistenzfunktion kann insbesondere im Rahmen eines wenigstens teilweise automatisierten Fahrens des Fahrzeugs ausgeführt werden. Beispielsweise kann es sich um eine ACC-Funktion (d.h. eine kombinierte Geschwindigkeits- und Abstandsregelung), einen Lenk- und Spurführungsassistenten (LSA), eine Spurwechselassistenzfunktion (SWA), eine Parkassistenzfunktion oder dergleichen handeln.

Das System umfasst: Ein GNSS-Empfängermodul, das eingerichtet ist, GNSS-Signale zu empfangen und Informationen bezüglich einer Qualität der aktuell verfügbaren GNSS-Signale bereitzustellen; ein Bewertungsmodul, das eingerichtet ist, in Abhängigkeit von den bereitgestellten Informationen anhand einer Look-Up-Tabelle einen Signalintegritätstatus zu bestimmen, der sich auf die Verwendbarkeit der aktuell verfügbaren GNSS-Signale für die Steuerung der Fahrassistenzfunktion bezieht; und ein Steuerungsmodul, das eingerichtet ist, die Fahrassistenzfunktion in Abhängigkeit von dem Signalintegritätstatus der aktuell verfügbaren GNSS-Signale zu steuern und/oder die aktuell verfügbaren GNSS-Signale in Abhängigkeit von dem Signalintegritätstatus zur Steuerung der Fahrassistenzfunktion heranzuziehen (d.h. u.U. auch in Abhängigkeit von dem Signalintegritätstatus die Entscheidung zu treffen, die aktuell verfügbaren GNSS-Signale nicht zur Steuerung der Fahrassistenzfunktion heranzuziehen). Dabei kann das System z.B. ferner ein Positionierungsmodul umfassen, das eingerichtet ist, in Abhängigkeit der bereit gestellten Information aus dem GNSS-Empfängermodul und des Signalintegritätsstatus eine hochgenaue Positionslösung zu bestimmen, auf deren Basis das Steuerungsmodul die Fahrassistenzfunktion steuert. Dabei kann die Verfügbarkeit der hoch genauen Positionslösung z.B. durch eine zusätzliche Verwendung von Daten einer Intertialsensorik und/oder von gemessenen Radumdrehungen weiter gesteigert werden.

Das GNSS-Empfängermodul kann eingerichtet sein, die Informationen bezüglich der Qualität der aktuell verfügbaren die GNSS-Signale auf der Grundlage der empfangenen GNSS-Signale zu bestimmen und sie sodann den Bewertungsmodul bereitzustellen. Das GNSS-Empfängermodul kann eine oder mehrere (Daten-)Verarbeitungseinrichtungen aufweisen, die programmiert sind, Berechnungen zur Bestimmung solcher Informationen auszuführen. Weiter ist auch denkbar, dass das GNSS-Empfängermoduls eingerichtet ist, dedizierte Messungen von geeigneten Observablen zum Bestimmen der Informationen bezüglich der Qualität der aktuell verfügbaren GNSS-Signale durchzuführen.

Das Bewertungsmodul kann ebenfalls eine oder mehrere Verarbeitungseinrichtungen umfassen, die zur Bestimmung des Signalintegritätstatus in Abhängigkeit von den durch das GNSS-Empfängermodul bereitgestellten Informationen programmiert sind. Dabei ist auch möglich, dass das Bewertungsmodul ganz oder teilweise in das GNSS-Empfängermodul integriert ist; so können Funktionen des GNSS-Empfängermoduls und des Bewertungsmoduls bei einigen denkbaren Ausführungsformen mittels derselben oder denselben Verarbeitungseinrichtungen ausgeführt werden. Ferner ist möglich, dass Funktionen des vorstehend erwähnten Positionierungsmoduls ganz oder teilweise mittels derselben Verarbeitungseinrichtungen wie Funktionen des Bewertungsmoduls ausgeführt werden. Es ist dabei z.B. auch denkbar, dass das Bewertungsmodul einen Teil des Positionierungsmoduls bildet oder dass das Bewertungsmodul und ggf. das Positionierungsmodul Teile des Steuerungsmoduls bilden oder dass eine oder mehrere von den genannten Modulen gemeinsam genutzte Verarbeitungseinrichtung(en) vorgesehen sind.

Das Bewertungsmodul kann ferner einen Datenspeicher aufweisen oder in der Weise eingerichtet sein, dass es auf einen Datenspeicher zugreift, wobei die Look-Up-Tabelle, welche das Bewertungsmodul zum Bestimmen des Signalintegritätstatus heranzieht, in dem Datenspeicher hinterlegt ist. Dabei kann die Look-Up-Tabelle entsprechend einer vordefinierten Metrik eine Zuordnung zwischen bestimmten, mit der Qualität der aktuell verfügbaren GNSS-Signale zusammenhängenden Größen, wie sie von dem GNSS-Empfängermodul bereitgestellt werden, und dem Signalintegritätstatus, der sich auf die Verwendbarkeit der aktuell verfügbaren GNSS-Signale (insbesondere hinsichtlich ihrer Verfügbarkeit, Genauigkeit und/oder Zuverlässigkeit) bezieht, enthalten. Dabei kann die Zuordnung sich speziell auf die betrachtete Fahrassistenzfunktion beziehen. Es können auch mehrere unterschiedliche Zuordnungen definiert sein, die sich jeweils auf eine bestimmte Fahrassistenzfunktion entsprechend deren Anforderungen an Verfügbarkeit, Genauigkeit und/oder Zuverlässigkeit der GNSS-Signale beziehen. Handelt es sich bei der betrachteten Fahrassistenzfunktion beispielsweise um einen Lenk- und Spurführungsassistenten (LSA), so kann die Look-Up-Tabelle z.B. eine Zuordnung enthalten, die in Abhängigkeit von Genauigkeitsanforderungen des LSA an bestimmte aus den GNSS-Signalen abgeleitete Größen, wie etwa einer Genauigkeitsanforderung an eine horizontale Positionsbestimmung, festgelegt worden ist.

Die Look-Up-Tabelle bzw. die darin enthaltene Zuordnung kann z.B. wenigstens teilweise auf statistischen Zusammenhängen beruhen, die auf der Grundlage von Simulationen und/oder Versuchsfahrten empirisch bestimmt und/oder verifiziert worden sind.

Das Bestimmen des Signalintegritätstatus mittels des Bewertungsmoduls umfasst ein Vergleichen mehrerer in den bereitgestellten Informationen enthaltener oder aus diesen abgeleiteter Signalqualitätsindikatoren mit jeweiligen in der Look-Up-Tabelle hinterlegten Schwellenwerten. Dabei können die Signalqualitätsindikatoren wenigsten zwei, bevorzugt wenigstens drei und besonders bevorzugt alle der folgenden Größen umfassen:
- Eine Anzahl der aktuell verfügbaren GNSS-Satelliten, d.h. die Anzahl der Satelliten, von denen das GNSS-Empfängermodul aktuell für die Positionsbestimmung verwertbare Signale empfangen kann;
- eine horizontale und/oder vertikale Verringerung der Genauigkeit (Englisch: dilution of precision - DoP), die sich insbesondere aus den Positionen der aktuell verfügbaren GNSS-Satelliten relativ zueinander und zu den GNSS-Empfängermodul ergibt;
- ein an dem GNSS-Empfängermodul auftretendes Coderauschen (Englisch: code noise), vorzugsweise in Form eines gewichteten Mittelwerts von Coderauschwerten für alle verfügbaren Satelliten, wobei die Gewichtung bei der Mittelwertbildung z.B. in Abhängigkeit von der jeweiligen Satelliten-Elevation vorgenommen werden kann;
- ein an dem GNSS-Empfängermodul auftretendes Phasenrauschen (Englisch: phase noise), vorzugsweise in Form eines gewichteten Mittelwerts von Phasenrauschwerten für alle verfügbaren Satelliten, wobei die Gewichtung bei der Mittelwertbildung z.B. in Abhängigkeit von der jeweiligen Satelliten-Elevation vorgenommen werden kann;
- einen Phasennachführungsverlust (Englisch: phase tracking loss); dieser kann sich auf eine Korrelation zwischen Observablen beziehen und beispielsweise in Form einer Anzahl von möglichen Cycle Slips innerhalb eines definierten Zeitfensters angegeben werden, insbesondere als eine Summe einer normierten Anzahl von Cycle Slips aller simultan verwendeter Satelliten innerhalb eines definierten Zeitfensters;
- einen Interferenzindikator, der einen Grad von Mehrweg-Interferenz (Englisch: multipath interference) und/oder unbeabsichtigter Interferenz (Englisch: unintentional interference) angibt.

Unter einem Cycle Slip kann in diesem Zusammenhang z.B. insbesondere ein Verlust oder ein Fehler bei einer Phasenverfolgung im Rahmen einer Trägerphasenmessung verstanden werden. Derartige Cycle Slips spielen im Allgemeinen vor allem außerhalb eines urbanen Umfelds eine Rolle. Im urbanen Umfeld ist wegen der höheren Signalinterferenzen die Anzahl von Cycle Slips weniger relevant, da die Anforderungen an die Genauigkeiten der GNSS-basierten Positionsinformationen niedriger ist.

Eine weitere mögliche Größe, die als Signalqualitätsindikator verwendbar ist, ist eine Ausfallzeit (Englisch: outage time). Darunter ist die Zeit zu verstehen, die seit dem Beginn eines GNSS-Ausfalls verstrichen ist, wobei der GNSS-Ausfall insbesondere dadurch begründet sein kann, dass eine erforderliche Mindestanzahl von für die Positionsbestimmung verwendbaren Satelliten nicht verfügbar ist. Es kann in diesem Zusammenhang z.B. insbesondere eine Zeitspanne betrachtet werden, die angibt, wie viel Zeit seit einer letzten verfügbaren Codemessung verstrichen ist bzw. wie viel Zeit seit einer letzten verfügbaren Codemessung auf der Basis von einer bestimmten Mindestanzahl von Satelliten, wie z.B. mindestens vier Satelliten, verstrichen ist.

Ein weiterer möglicher Signalqualitätsindikator, der bei beim Bestimmen des Signalintegritätstatus mittels des Bewertungsmoduls mittels der Look-Up-Tabelle eine Rolle spielen kann, ist ein Zeitpunkt, zu dem zuletzt eine Korrekturdienstnachricht erzeugt wurde bzw. ein Alter von Korrekturen (Englisch: age of corrections), d.h. eine gemessene Zeitspanne, die zwischen einer zuletzt erzeugten Korrekturdienstnachricht und der aktuellen Systemzeit (Samplezeit) des Bewertungsmoduls verstrichen ist. Derartige Korrekturdienstnachrichten sind dem Fachmann im Zusammenhang mit einer GNSS-basierten hochgenauen Positionierung an sich bekannt. Sie umfassen üblicherweise Korrekturen zu Code- und Phasenmessungen, die z.B. von kommerziellen Korrekturdiensten bereitgestellt werden.

Als zusätzliche mögliche Signalqualitätsindikatoren können beim Bestimmen des Signalintegritätsstatus mittels der Look-Up-Tabelle z.B. auch eine laterale und/oder longitudinale Geschwindigkeit des Fahrzeugs und/oder eine laterale und/oder longitudinale Beschleunigung des Fahrzeugs herangezogen werden. Dabei können diese fahrzeugdynamischen Größen z.B. von einer Fahrzeugodometrie bereitgestellt werden. Alternativ oder zusätzlich können Geschwindigkeiten und/oder Beschleunigungen auch auf der Basis von GNSS-Informationen berechnet werden.

Die Look-Up-Tabelle bildet Kombinationen von mehreren durch die Schwellenwerte definierten Bereichen der Signalqualitätsindikatoren auf einen Nominalzustand aus einer Anzahl von definierten Nominalzuständen ab. Bevorzugt sind wenigstens drei unterschiedliche Nominalzustände definiert. Dabei können die unterschiedlichen Kombinationen von Signalqualitätsindikatoren bestimmte Szenarien hinsichtlich der Verfügbarkeit und Qualität von GNSS-Signalen für die Positionsbestimmung definieren. Beispielsweise können derartige Szenarien in etwa einem Open-Sky-Szenario, einem Urban-Szenario, einem Deep-Urban-Szenario, etc. entsprechen. Alternativ oder zusätzlich dazu können auch andere Szenarien eine Rolle spielen, die jeweils bestimmte Störeinflüsse für die GNSS-Signale mit sich bringen, wie z.B. eine Fahrt im Tunnel oder im Bereich einer Schilderbrücke.

Weiter ist vorgesehen, dass die Look-Up-Tabelle jedem der Nominalzustände einen Signalintegritätstatus aus einer Anzahl von definierten Signalintegritätsstati zuordnet. Dabei ist es auch möglich, dass mehrere unterschiedliche Nominalzustände demselben Signalintegritätstatus zugeordnet werden.

Bevorzugt sind wenigstens drei unterschiedliche Signalintegritätsstati definiert. Insbesondere können zumindest die drei Signalintegritätsstati "verfügbar und sicher", "verfügbar und nicht sicher" sowie _{"}nicht verfügbar" (oder dergleichen) definiert sein, welche die Verwendbarkeit der GNSS-Signale im Rahmen einer bestimmten Fahrassistenzfunktion entsprechend charakterisieren.

Die Zuordnung zwischen Nominalzuständen und Signalintegritätsstati kann jeweils speziell bezogen auf die betrachtete Fahrassistenzfunktion definiert sein. Mit anderen Worten kann die Look-Up-Tabelle für mehrere unterschiedliche Fahrassistenzfunktionen unterschiedliche Zuordnungen definieren bzw. es können für mehrere unterschiedliche Fahrassistenzfunktionen unterschiedliche Look-Up-Tabellen mit jeweiligen Zuordnungen hinterlegt sein.

Das Bewertungsmodul kann auf der Datenverarbeitungsebene eingerichtet sein, entsprechend dem jeweils ermittelten Signalintegritätstatus ein Flag zu setzen. Dieses Flag, welches zumindest annähernd in Echtzeit Auskunft über die Verwendbarkeit der aktuell Verfügbaren GNSS-Signale für eine betrachtete Fahrassistenzfunktion gibt, kann sodann bei der Steuerung der Fahrassistenzfunktion mittels des Steuerungsmoduls Berücksichtigung finden. Beispielsweise kann das Steuerungsmodul entscheiden, eine sicherheitskritische Funktion nicht oder nur eingeschränkt auszuführen, wenn das Bewertungsmodul den Signalintegritätstatus "nicht verfügbar" oder "verfügbar und nicht sicher" ermittelt hat.

Allgemein kann das Steuerungsmodul eingerichtet sein, die Fahrassistenzfunktion in Abhängigkeit von dem Signalintegritätstatus sowie (falls in ausreichender Qualität verfügbar) in Abhängigkeit von den aktuell verfügbaren GNSS-Signalen selbst bzw. von daraus abgeleiteten Größen, wie z.B. einer Fahrzeugposition und/oder einer Fahrzeuggeschwindigkeit, zu steuern.

Das Steuerungsmodul kann ferner eingerichtet sein, die aktuell verfügbaren GNSS-Signale in Abhängigkeit von dem Signalintegritätstatus zur Steuerung der Fahrassistenzfunktion heranzuziehen, indem es einen Einfluss der GNSS-Signale auf die Steuerung der Fahrassistenzfunktion adaptiv in Abhängigkeit von dem Signalintegritätstatus der aktuell verfügbaren GNSS-Signale und/oder in Abhängigkeit von einem den aktuell verfügbaren GNSS-Signalen zugeordneten Nominalzustand gewichtet. Beispielsweise kann im Fall des Signalintegritätstatus "verfügbar und nicht sicher" vorgesehen sein, dass für eine HD-Karten-Lokalisierung im Rahmen der Fahrassistenzfunktion, die GNSS-Signale zwar berücksichtigt, aber gegenüber anderen Informationsquellen, wie z.B. Kamera-, Radar- oder Lidar-Informationen, vergleichsweise gering gewichtet werden.

Ferner kann das Steuerungsmodul eingerichtet sein, im Fall einer Degradation (d.h. einer Verschlechterung) des Signalintegritätstatus und/oder im Fall einer Degradation des Nominalzustands der aktuell Verfügbaren GNSS-Signale die Fahrassistenzfunktion entsprechend zu degradieren. Dabei kann die Degradation der Fahrassistenzfunktion z.B. schrittweise mit einer sukzessiven Degradation des Signalintegritätstatus und/oder des Nominalzustands erfolgen. Im Fall eines sich sukzessive verschlechternden Signalintegritätstatus bzw. Nominalzustands kann dies etwa von einer voll ausgeprägten Funktionalität über eine - ggf. in mehreren Abstufungen - eingeschränkte Funktionalität bis hin zur Nichtverfügbarkeit der Fahrassistenzfunktion führen (und umgekehrt).

Ein zweiter Erfindungsaspekt ist ein computerimplementiertes Verfahren zum Steuern einer Fahrassistenzfunktion, umfassend die Schritte:
- Bereitstellen von Informationen bezüglich einer Qualität aktuell verfügbarer GNSS-Signale;
- Bestimmen eines Signalintegritätstatus der aktuell verfügbaren GNSS-Signale in Abhängigkeit von den bereitgestellten Informationen anhand einer Look-Up-Tabelle, wobei der Signalintegritätstatus sich auf die Verwendbarkeit der aktuell verfügbaren GNSS-Signale für die Steuerung der Fahrassistenzfunktion bezieht (und z.B. gemäß einer definierten Metrik eine Verfügbarkeit, Zuverlässigkeit und/oder Genauigkeit der aktuell verfügbaren GNSS-Signale in Bezug auf die betrachtete Fahrassistenzfunktion angibt), und wobei das Bestimmen des Signalintegritätstatus ein Vergleichen mehrerer in den bereitgestellten Informationen enthaltener und/oder aus diesen abgeleiteter Signalqualitätsindikatoren mit jeweiligen in der Look-Up-Tabelle hinterlegten Schwellenwerten umfasst;
- Steuern der Fahrassistenzfunktion in Abhängigkeit von dem Signalintegritätstatus der aktuell verfügbaren GNSS-Signale (sowie ggf. in Abhängigkeit von den GNSS-Signalen selbst bzw. in Abhängigkeit von daraus abgeleiteten Größen) und/oder Heranziehen der aktuell verfügbaren GNSS-Signale in Abhängigkeit von dem Signalintegritätstatus zur Steuerung der Fahrassistenzfunktion.

Dabei bildet die Look-Up-Tabelle Kombinationen von mehreren durch die Schwellenwerte definierten Bereichen der Signalqualitätsindikatoren auf einen von einer Anzahl von Nominalzuständen ab und ordnet jedem der Nominalzustände einen Signalintegritätstatus zu. Den oben genannten Verfahrensschritten kann ferner ein Schritt vorgeschaltet sein, in welchem GNSS-Signale mittels eines GNSS-Empfängermoduls empfangen werden. Die in der Folge bereitgestellten Informationen bezüglich der Qualität der aktuell verfügbaren GNSS-Signale können dann zunächst auf der Grundlage dieser empfangenen GNSS-Signale ermittelt werden.

Das Verfahren gemäß dem zweiten Erfindungsaspekt kann insbesondere mittels eines Systems gemäß dem ersten Erfindungsaspekt ausgeführt werden. Daher können Ausführungsformen des erfindungsgemäßen Verfahrens den vorstehend und nachfolgend beschriebenen vorteilhaften Ausführungsformen des erfindungsgemäßen Systems entsprechen und umgekehrt.

Ein dritter Erfindungsaspekt ist eine Software umfassend Befehle, die bei der Ausführung der Software durch eine Verarbeitungseinrichtung diese veranlassen, ein Verfahren gemäß dem zweiten Erfindungsaspekt auszuführen. Dabei kann die Software auch auf mehrere separate Teilprogramme, aufgeteilt sein, die jeweils auf verschiedenen, ggf. räumlich voneinander entfernten Verarbeitungseinrichtungen (wie z.B. mehreren Prozessoren) ausgeführt werden können.

Beispielsweise kann ein System gemäß dem ersten Erfindungsaspekt eine oder mehrere Verarbeitungsvorrichtungen umfassen, auf denen eine Software gemäß dem dritten Erfindungsaspekt ausführbar ist.

Ein vierter Erfindungsaspekt ist ein computerlesbares Speichermedium, umfassend Befehle, die bei der Ausführung durch eine (ggf. verteilte) Verarbeitungseinrichtung diese veranlassen, ein Verfahren gemäß dem zweiten Erfindungsaspekt auszuführen. Mit anderen Worten kann auf dem computerlesbaren Speichermedium eine Software gemäß dem dritten Erfindungsaspekt gespeichert sein.

In Übereinstimmung mit dem Vorstehenden werden gemäß einigen Ausführungsformen der vorliegenden Erfindung aktuelle Rahmenbedingungen hinsichtlich verfügbarer GNSS-Signale, die sich in mittels eines GNSS-Empfängermoduls erfassbaren Observablen wiederspiegeln, bestimmten Szenarien (Nominalzuständen) zugeordnet. Diese werden ihrerseits auf einen Signalintegritätstatus abgebildet, der ein zusätzliches Vertrauens- und Sicherheitsmaß darstellt. Hierdurch wird eine gezielte und fein abgestufte Berücksichtigung der Verfügbarkeit und Qualität der GNSS-Signale bei einer Positionsbestimmung im Rahmen einer Fahrassistenzfunktion ermöglicht. Möglich ist insbesondere auch eine dynamische, szenarioabhängige Degradierung der Positionsinformation und ggf. in der Folge auch der Fahrassistenzfunktion. Es muss sich jedoch nicht notwendigerweise um eine Degradierung handeln. Allgemeiner können GNSS-Positionsinformationen situationsbedingt stärker oder schwächer (im Vergleich zu Informationen, die z.B. von anderen Sensoren bereitgestellt werden) für die Fahrassistenzfunktion berücksichtigt werden. Mit anderen Worten kann die Fahrassistenzfunktion ggf. andere Sensorsysteme stärker in der Lokalisierung einbinden um eine Degradationen durch die unzulängliche GNSS-Positionsinformation zu vermeiden oder umgekehrt. Die Fahrassistenzfunktion kann die Gewichtung der Nutzung der GNSS-Positionierungslösung adaptiv basierend auf dem jeweiligen Szenario wählen. Durch die feinere Modellierung der GNSS-Positionsbestimmungslösung kann die Nutzbarkeit des Gesamtsystems und die Verfügbarkeit der Fahrassistenzfunktion erhöht werden.

Darüber hinaus eignet sich die hier vorgeschlagene Lösung besonders gut für eine Produktsicherheitsanalyse gemäß SOTIF (für Englisch "Safety Of The Intended Functionality"), da sie eine szenarioabhängige Sicherheitsanalyse an Stelle einer globalen Worst-Case-Betrachtung, die ggf. zu einer unnötig konservativen Auslegung des Gesamtsystems führen würde, ermöglicht. Im Ergebnis kann die vorgeschlagene Lösung so dazu beitragen, auch die anspruchsvollen Sicherheitsziele eines FAS auf dem SAE-Level 3 oder höher zu erreichen und zu validieren bzw. nachzuweisen. Ferner können durch die gezielte, situationsabhängige Nutzung von GNSS-Daten Einsparpotenziale bei anderen Sensoren gehoben werden.

Die Erfindung wird nun anhand von Ausführungsbeispielen sowie unter Bezugnahme auf die beigefügten Zeichnungen näher erläutert.
- Fig. 1: veranschaulicht beispielhaft und schematisch ein System zum Steuern einer Fahrassistenzfunktion.
- Fig. 2: zeigt ein schematisches Ablaufdiagramm eines Verfahrens zum Steuern einer Fahrassistenzfunktion.
- Fig. 3: veranschaulicht beispielhaft und schematisch eine Look-Up-Tabelle zum Bestimmen eines Signalintegritätstatus von aktuell verfügbaren GNSS-Signalen.

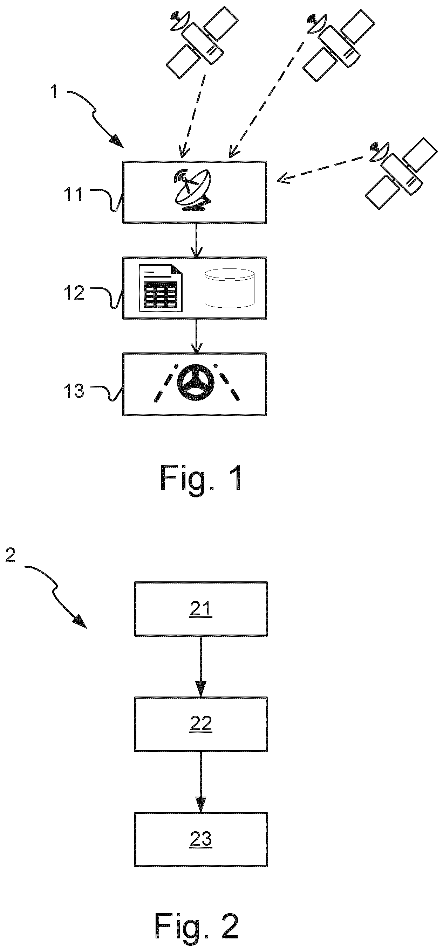

Nachfolgend wird das in Fig. 1 dargestellte Ausführungsbeispiel eines Systems 1 zum Steuern einer Fahrassistenzfunktion erläutert, wobei sogleich auch auf die in Fig. 2 in Form eines Blockdiagramms veranschaulichten Schritte 21-23 eines entsprechenden Verfahrens 2 Bezug genommen wird.

Das System 1 umfasst ein GNSS-Empfängermodul 11, ein Bewertungsmodul 12 und ein Steuerungsmodul 12.

Das GNSS-Empfängermodul 11 ist eingerichtet, GNSS-Signale zu empfangen und Informationen bezüglich einer Qualität der aktuell verfügbaren GNSS-Signale bereitzustellen. Dies entspricht dem Verfahrensschritt 21 in Fig. 2: Bereitstellen von Informationen bezüglich einer Qualität aktuell verfügbarer GNSS-Signale.

Das Bewertungsmodul 12 ist eingerichtet, in Abhängigkeit von den bereitgestellten Informationen anhand einer Look-Up-Tabelle einen Signalintegritätstatus zu bestimmen, der sich auf die Verwendbarkeit der aktuell verfügbaren GNSS-Signale für die Steuerung der Fahrassistenzfunktion bezieht. Dies entspricht dem Verfahrensschritt 22 in Fig. 2: Bestimmen eines Signalintegritätstatus der aktuell verfügbaren GNSS-Signale in Abhängigkeit von den bereitgestellten Informationen anhand einer in einem Datenspeicher des Bewertungsmoduls 12 hinterlegten Look-Up-Tabelle, wobei der Signalintegritätstatus sich auf die Verwendbarkeit der aktuell verfügbaren GNSS-Signale für die Steuerung der Fahrassistenzfunktion bezieht. Dabei werden zum Bestimmen des Signalintegritätstatus mehrere in den bereitgestellten Informationen enthaltene oder aus diesen abgeleitete Signalqualitätsindikatoren mit jeweiligen in der Look-Up-Tabelle hinterlegten Schwellenwerten verglichen.

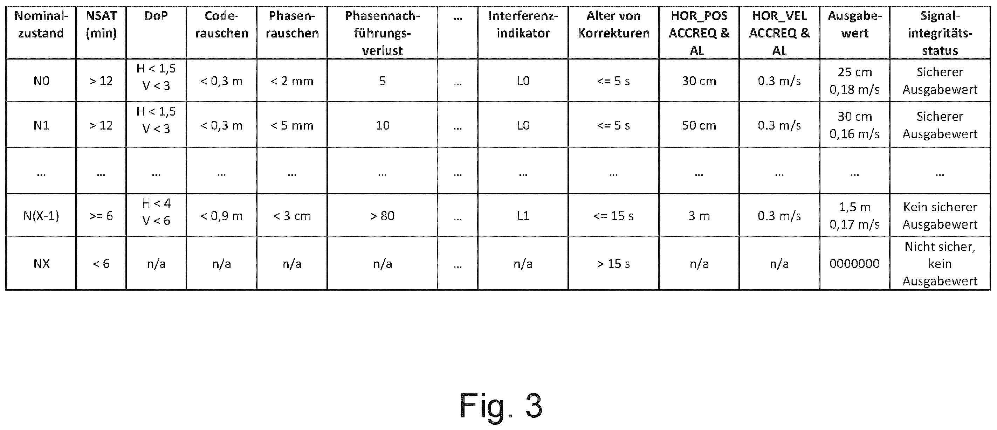

Die Fig. 3 zeigt beispielhaft und schematisch eine solche Look-Up-Tabelle zum Bestimmen eines Signalintegritätstatus von aktuell verfügbaren GNSS-Signalen. Die bei diesem Ausführungsbeispiel verwendeten Signalqualitätsindikatoren umfassen insbesondere eine Anzahl der aktuell verfügbaren GNSS-Satelliten "NSAT (min)", eine horizontale und/oder vertikale Verringerung der Genauigkeit "DoP" (in der Tabelle sind separate Schwellenwerte für die horizontale DoP "H" und die vertikale DoP "V" angegeben), ein Coderauschen, ein Phasenrauschen einen Phasennachführungsverlust; ein Interferenzindikator, der einen Grad von Mehrweg-Interferenz und/oder unbeabsichtigter Interferenz angibt, und ein Alter von Korrekturen. Dabei bildet die Look-Up-Tabelle Kombinationen von mehreren durch die Schwellenwerte definierten Bereichen der genannten Signalqualitätsindikatoren auf einen von einer Anzahl von Nominalzuständen N0, N1, ... N(X-1), NX ab.

Beispielsweise würde das Bewertungsmodul 12 anhand der gezeigten Look-Up-Tabelle für die aktuell verfügbaren GNSS-Signale den Nominalzustand "N1" bestimmen, wenn es auf der Grundlage der von dem GNSS-Empfängermodul bereitgestellten Informationen feststellt, dass aktuell 14 Satelliten verfügbar sind, die horizontale DoP 1,2 ist, die vertikale DoP 2,0 ist, das Coderauschen 0,2 beträgt, das Phasenrauschen 3 mm beträgt, der Phasennachführungsverlust 10 beträgt, der Interferenzindikator L0 ist und das Alter von Korrekturen 2 Sekunden beträgt.

Weiter ordnet die Look-Up-Tabelle jedem der Nominalzustände einen Signalintegritätstatus zu, der in der ganz rechten Spalte angegeben ist. Bei diesem Ausführungsbeispiel sind drei mögliche Signalintegritätsstati vorgesehen, nämlich "Sicherer Ausgabewert", "Kein sicherer Ausgabewert" und "Nicht sicher, kein Ausgabewert".

Die Zuordnung zwischen den Nominalzuständen (Szenarien) N0, N1, ... N(X-1), NX und den Signalintegritätsstati "Sicherer Ausgabewert" oder "Kein sicherer Ausgabewert" ist hier bezogen auf eine bestimmte Fahrassistenzfunktion entsprechend deren Anforderungen an Verfügbarkeit, Genauigkeit und/oder Zuverlässigkeit der GNSS-Signale definiert. Im Allgemeinen kann die Look-Up-Tabelle für mehrere unterschiedliche Fahrassistenzfunktionen unterschiedliche Zuordnungen definieren bzw. es können für mehrere unterschiedliche Fahrassistenzfunktionen unterschiedliche Look-Up-Tabellen mit jeweiligen Zuordnungen hinterlegt sein.

In der Tabelle in Fig. 3 sind exemplarische Genauigkeitsanforderungen an eine horizontalen Positionsbestimmung ("HOR_POS ACCREQ & AL") sowie an eine horizontale Geschwindigkeitsbestimmung ("HOR_VEL ACCREQ & AL") angegeben, die durch die verfügbaren GNSS-Signale in einem bestimmten Szenario N0, N1, ... N(X-1) oder NX jeweils mit einer großen Verfügbarkeit bzw. Zuverlässigkeit (z.B. von mindestens 99%) erfüllt werden können. Dabei schränken die Genauigkeitsanforderungen HOR_POS ACCREQ und HOR_VEL ACCREQ eine erwartete horizontale bzw. vertikale Abweichung ein, wobei durch die Angabe "AL" (für "Alarm Limit") noch genauer spezifiziert ist, dass es sich um eine die maximal erlaubte Abweichung, die von der Fahrassistenzfunktion tolerierbar ist, handelt. Mit anderen Worten umfasst die Look-Up-Tabelle also bei diesem Ausführungsbeispiel auch ein Mapping von den Signalqualitätsindikatoren bzw. den Nominalzuständen auf entsprechende Positionsbestimmungsgenauigkeiten, welches - über den resultierenden Signalintegritätsstatus - bei der Steuerung der Fahrassistenzfunktion Berücksichtigung finden kann.

So kann z.B. in der oben genannten Beispielkonstellation, in welcher der Nominalzustand/das Szenario "N1" bestimmt wurde, ein hier exemplarisch angenommener Ausgabewert von 30 cm für eine horizontale Fahrzeugposition mit einer Genauigkeit von +/- 50 cm angegeben werden, und ein hier exemplarisch angenommener Ausgabewert von 0,18 m/s für eine horizontale Geschwindigkeit des Fahrzeugs kann mit einer Genauigkeit von +/- 0,3 m/s angegeben werden. Diese in der Look-Up-Tabelle enthaltenen Informationen können beispielsweise auf Simulationen und/oder Versuchsfahren, die für die verschiedenen Szenarien durchgeführt worden sind, beruhen. Bezogen auf die hier betrachtete Fahrassistenzfunktion reichen die genannten Genauigkeiten aus, um für Zwecke der Weiterverarbeitung durch das Steuerungsmodul den in der letzten Spalte angegebenen Signalintegritätstatus "Sicherer Ausgabewert" zu erhalten.

Das Steuerungsmodul 13 ist eingerichtet, die Fahrassistenzfunktion in Abhängigkeit von dem Signalintegritätstatus der aktuell verfügbaren GNSS-Signale zu steuern und/oder die aktuell verfügbaren GNSS-Signale in Abhängigkeit von dem Signalintegritätstatus zur Steuerung der Fahrassistenzfunktion heranzuziehen. Dies entspricht dem Verfahrensschritt 23 in Fig. 2: Steuern der Fahrassistenzfunktion in Abhängigkeit von dem Signalintegritätstatus der aktuell verfügbaren GNSS-Signale und/oder Heranziehen der aktuell verfügbaren GNSS-Signale in Abhängigkeit von dem Signalintegritätstatus zur Steuerung der Fahrassistenzfunktion.

Das Steuerungsmodul kann ferner eingerichtet sein, die aktuell verfügbaren GNSS-Signale in Abhängigkeit von dem Signalintegritätstatus zur Steuerung der Fahrassistenzfunktion heranzuziehen, indem es einen Einfluss der GNSS-Signale auf die Steuerung der Fahrassistenzfunktion adaptiv in Abhängigkeit von dem Signalintegritätstatus der aktuell verfügbaren GNSS-Signale und/oder in Abhängigkeit von einem den aktuell verfügbaren GNSS-Signalen zugeordneten Nominalzustand gewichtet. Beispielsweise kann für den Fall des Signalintegritätstatus "verfügbar und nicht sicher" vorgesehen sein, dass für eine HD-Karten-Lokalisierung im Rahmen der Fahrassistenzfunktion, die GNSS-Signale zwar berücksichtigt, aber gegenüber anderen Informationsquellen wie z.B. Kamera-, Radar- oder Lidar-Informationen vergleichsweise gering gewichtet werden.

Ferner kann das Steuerungsmodul eingerichtet sein, im Fall einer Degradation (d.h. Verschlechterung) des Signalintegritätstatus und/oder im Fall einer Degradation des Nominalzustands der aktuell Verfügbaren GNSS-Signale die Fahrassistenzfunktion zu degradieren. Dabei kann die Degradation der Fahrassistenzfunktion z.B. schrittweise mit einer sukzessiven Degradation des Nominalzustands und/oder des Signalintegritätstatus einhergehen. Im Fall eines sich sukzessive verschlechternden Nominalzustands (z.B. bis hinab zu "NX") bzw. eines sich sukzessive verschlechternden Signalintegritätstatus (z.B. bis hinab zu "Nicht sicher, kein Ausgabewert") kann dies etwa von einer voll ausgeprägten Funktionalität über eine - ggf. in mehreren Abstufungen - eingeschränkte Funktionalität bis hin zur Nichtverfügbarkeit der Fahrassistenzfunktion führen (und umgekehrt).

## Patentansprüche

1. System (1) zum Steuern einer Fahrassistenzfunktion, umfassend
- ein GNSS-Empfängermodul (11), das eingerichtet ist, GNSS-Signale zu empfangen und Informationen bezüglich einer Qualität der aktuell verfügbaren GNSS-Signale bereitzustellen;
- ein Bewertungsmodul (12), das eingerichtet ist, in Abhängigkeit von den bereitgestellten Informationen anhand einer Look-Up-Tabelle einen Signalintegritätsstatus zu bestimmen, der sich auf die Verwendbarkeit der aktuell verfügbaren GNSS-Signale für die Steuerung der Fahrassistenzfunktion bezieht, wobei das Bestimmen des Signalintegritätstatus ein Vergleichen mehrerer in den bereitgestellten Informationen enthaltener und/oder aus diesen abgeleiteter Signalqualitätsindikatoren mit jeweiligen in der Look-Up-Tabelle hinterlegten Schwellenwerten umfasst; und
- ein Steuerungsmodul (13), das eingerichtet ist, die Fahrassistenzfunktion in Abhängigkeit von dem Signalintegritätstatus der aktuell verfügbaren GNSS-Signale zu steuern und/oder die aktuell verfügbaren GNSS-Signale in Abhängigkeit von dem Signalintegritätstatus zur Steuerung der Fahrassistenzfunktion heranzuziehen;
**dadurch gekennzeichnet, dass** die Look-Up-Tabelle
- Kombinationen von mehreren durch die Schwellenwerte definierten Bereichen der Signalqualitätsindikatoren auf einen von einer Anzahl von Nominalzuständen abbildet; und
- jedem der Nominalzustände einen Signalintegritätstatus zuordnet.

2. System (1) nach Anspruch 1, **dadurch gekennzeichnet, dass** die Signalqualitätsindikatoren wenigsten zwei, insbesondere wenigstens drei, der folgenden Größen umfassen:
- eine Anzahl der aktuell verfügbaren GNSS-Satelliten;
- eine horizontale und/oder vertikale Verringerung der Genauigkeit;
- ein Coderauschen;
- ein Phasenrauschen;
- einen Phasennachführungsverlust;
- einen Interferenzindikator, der einen Grad von Mehrweg-Interferenz und/oder unbeabsichtigter Interferenz angibt.

3. System (1) nach einem der vorhergehenden Ansprüche, **dadurch gekennzeichnet, dass** das Steuerungsmodul (13) eingerichtet ist, einen Einfluss der GNSS-Signale bei der Steuerung der Fahrassistenzfunktion in Abhängigkeit von einem den aktuell verfügbaren GNSS-Signalen zugeordneten Nominalzustand zu gewichten.

4. System (1) nach einem der vorhergehenden Ansprüche, **dadurch gekennzeichnet, dass** das Steuerungsmodul (13) eingerichtet ist, im Fall einer Degradation des Nominalzustands der aktuell verfügbaren GNSS-Signale die Fahrassistenzfunktion zu degradieren.

5. System (1) nach einem der vorhergehenden Ansprüche, **dadurch gekennzeichnet, dass** das Steuerungsmodul (13) eingerichtet ist, einen Einfluss der GNSS-Signale bei der Steuerung der Fahrassistenzfunktion in Abhängigkeit von dem Signalintegritätstatus der aktuell verfügbaren GNSS-Signale zu gewichten.

6. System (1) nach einem der vorhergehenden Ansprüche, **dadurch gekennzeichnet, dass** das Steuerungsmodul (13) eingerichtet ist, im Fall einer Degradation des Signalintegritätstatus der aktuell verfügbaren GNSS-Signale die Fahrassistenzfunktion zu degradieren.

7. Computerimplementiertes Verfahren (2) zum Steuern einer Fahrassistenzfunktion, umfassend
- Bereitstellen (21) von Informationen bezüglich einer Qualität aktuell verfügbarer GNSS-Signale;
- Bestimmen (22) eines Signalintegritätstatus der aktuell verfügbaren GNSS-Signale in Abhängigkeit von den bereitgestellten Informationen anhand einer Look-Up-Tabelle, wobei der Signalintegritätstatus sich auf die Verwendbarkeit der aktuell verfügbaren GNSS-Signale für die Steuerung der Fahrassistenzfunktion bezieht, wobei das Bestimmen (22) des Signalintegritätstatus ein Vergleichen mehrerer in den bereitgestellten Informationen enthaltener und/oder aus diesen abgeleiteter Signalqualitätsindikatoren mit jeweiligen in der Look-Up-Tabelle hinterlegten Schwellenwerten umfasst; und
- Steuern (23) der Fahrassistenzfunktion in Abhängigkeit von dem Signalintegritätstatus der aktuell verfügbaren GNSS-Signale und/oder Heranziehen (23) der aktuell verfügbaren GNSS-Signale in Abhängigkeit von dem Signalintegritätstatus zur Steuerung der Fahrassistenzfunktion;
**dadurch gekennzeichnet, dass** die Look-Up-Tabelle
- Kombinationen von mehreren durch die Schwellenwerte definierten Bereichen der Signalqualitätsindikatoren auf einen von einer Anzahl von Nominalzuständen abbildet; und
- jedem der Nominalzustände einen Signalintegritätstatus zuordnet.

8. Software, umfassend Befehle, die bei der Ausführung der Software durch eine Verarbeitungseinrichtung diese veranlassen, ein Verfahren (2) nach Anspruch 7 auszuführen.

9. Computerlesbares Speichermedium, umfassend Befehle, die bei der Ausführung durch eine Verarbeitungseinrichtung diese veranlassen, ein Verfahren (2) nach Anspruch 7 auszuführen.

## Claims

1. System (1) for controlling a driving assistance function, comprising
- a GNSS receiver module (11) which is configured to receive GNSS signals and to provide information relating to a quality of the currently available GNSS signals;
- an assessment module (12) which is configured to use a lookup table to determine, on the basis of the information provided, a signal integrity status which relates to the usability of the currently available GNSS signals for controlling the driving assistance function, wherein the determination of the signal integrity status comprises comparing a plurality of signal quality indicators contained in the information provided and/or derived therefrom with respective threshold values stored in the lookup table; and
- a control module (13) which is configured to control the driving assistance function on the basis of the signal integrity status of the currently available GNSS signals and/or to use the currently available GNSS signals to control the driving assistance function on the basis of the signal integrity status;
**characterized in that** the look-up table
- maps combinations of a plurality of ranges of the signal quality indicators, which are defined by the threshold values, to one of a number of nominal states; and
- assigns a signal integrity status to each of the nominal states.

2. System (1) according to Claim 1, **characterized in that** the signal quality indicators comprise at least two, in particular at least three, of the following variables:
- a number of currently available GNSS satellites;
- a horizontal and/or vertical reduction in the accuracy;
- code noise;
- phase noise;
- a phase tracking loss;
- an interference indicator which indicates a degree of multipath interference and/or unintentional interference.

3. System (1) according to one of the preceding claims, **characterized in that** the control module (13) is configured to weight an influence of the GNSS signals when controlling the driving assistance function on the basis of a nominal state assigned to the currently available GNSS signals.

4. System (1) according to one of the preceding claims, **characterized in that** the control module (13) is configured, in the event of degradation of the nominal state of the currently available GNSS signals, to degrade the driving assistance function.

5. System (1) according to one of the preceding claims, **characterized in that** the control module (13) is configured to weight an influence of the GNSS signals when controlling the driving assistance function on the basis of the signal integrity status of the currently available GNSS signals.

6. System (1) according to one of the preceding claims, **characterized in that** the control module (13) is configured, in the event of degradation of the signal integrity status of the currently available GNSS signals, to degrade the driving assistance function.

7. Computer-implemented method (2) for controlling a driving assistance function, comprising
- providing (21) information relating to a quality of currently available GNSS signals;
- using a look-up table to determine (22) a signal integrity status of the currently available GNSS signals on the basis of the information provided, wherein the signal integrity status relates to the usability of the currently available GNSS signals for controlling the driving assistance function, wherein the determination (22) of the signal integrity status comprises comparing a plurality of signal quality indicators contained in the information provided and/or derived therefrom with respective threshold values stored in the lookup table; and controlling (23) the driving assistance function on the basis of the signal integrity status of the currently available GNSS signals and/or using (23) the currently available GNSS signals to control the driving assistance function on the basis of the signal integrity status;
**characterized in that** the look-up table
- maps combinations of a plurality of ranges of the signal quality indicators, which are defined by the threshold values, to one of a number of nominal states; and
- assigns a signal integrity status to each of the nominal states.

8. Software comprising instructions which, when the software is executed by a processing device, cause the latter to carry out a method (2) according to Claim 7.

9. Computer-readable storage medium comprising instructions which, when executed by a processing device, cause the latter to carry out a method (2) according to Claim 7.

## Revendications

1. Système (1) de commande d'une fonction d'assistance à la conduite, comprenant :
- un module récepteur GNSS (11) conçu pour recevoir des signaux GNSS et fournir des informations relatives à la qualité des signaux GNSS actuellement disponibles ;
- un module d'évaluation (12) conçu pour déterminer, en fonction des informations fournies et à l'aide d'une table de correspondance, un état d'intégrité des signaux relatif à l'aptitude des signaux GNSS actuellement disponibles à être utilisés pour la commande de la fonction d'assistance à la conduite, la détermination de l'état d'intégrité des signaux comprenant la comparaison de plusieurs indicateurs de qualité des signaux contenus dans les informations fournies et/ou déduits de celles-ci avec des valeurs seuils respectives enregistrées dans la table de correspondance ; et
- un module de commande (13) conçu pour commander la fonction d'assistance à la conduite en fonction de l'état d'intégrité des signaux GNSS actuellement disponibles et/ou utiliser les signaux GNSS actuellement disponibles pour commander la fonction d'assistance à la conduite en fonction de leur état d'intégrité ;
**caractérisé en ce que** la table de correspondance
- associe des combinaisons de plusieurs plages d'indicateurs de qualité des signaux définies par les valeurs seuils à l'un d'un ensemble d'états nominaux ; et
- attribue un état d'intégrité des signaux à chacun des états nominaux.

2. Système (1) selon la revendication 1, **caractérisé en ce que** les indicateurs de qualité des signaux comprennent au moins deux, notamment au moins trois, des grandeurs suivantes :
- un nombre de satellites GNSS actuellement disponibles ;
- une dilution horizontale et/ou verticale de la précision ;
- un bruit de code ;
- un bruit de phase ;
- une perte de suivi de phase ;
- un indicateur d'interférence indiquant un degré d'interférence due aux trajets multiples et/ou d'interférence involontaire.

3. Système (1) selon l'une quelconque des revendications précédentes, **caractérisé en ce que** le module de commande (13) est conçu pour pondérer l'influence des signaux GNSS sur la commande de la fonction d'assistance à la conduite en fonction d'un état nominal attribué aux signaux GNSS actuellement disponibles.

4. Système (1) selon l'une quelconque des revendications précédentes, **caractérisé en ce que** le module de commande (13) est conçu pour dégrader la fonction d'assistance à la conduite en cas de dégradation de l'état nominal des signaux GNSS actuellement disponibles.

5. Système (1) selon l'une quelconque des revendications précédentes, **caractérisé en ce que** le module de commande (13) est conçu pour pondérer l'influence des signaux GNSS sur la commande de la fonction d'assistance à la conduite en fonction de l'état d'intégrité des signaux GNSS actuellement disponibles.

6. Système (1) selon l'une quelconque des revendications précédentes, **caractérisé en ce que** le module de commande (13) est conçu pour dégrader la fonction d'assistance à la conduite en cas de dégradation de l'état d'intégrité des signaux GNSS actuellement disponibles.

7. Procédé mis en œuvre par ordinateur (2) de commande d'une fonction d'assistance à la conduite, comprenant :
- la fourniture (21) d'informations relatives à la qualité des signaux GNSS actuellement disponibles ;
- la détermination (22) d'un état d'intégrité des signaux GNSS actuellement disponibles en fonction des informations fournies, à l'aide d'une table de correspondance, l'état d'intégrité des signaux étant relatif à l'aptitude des signaux GNSS actuellement disponibles à être utilisés pour la commande de la fonction d'assistance à la conduite, la détermination (22) de l'état d'intégrité des signaux comprenant la comparaison de plusieurs indicateurs de qualité des signaux contenus dans les informations fournies et/ou déduits de celles-ci avec des valeurs seuils respectives enregistrées dans la table de correspondance ; et
- la commande (23) de la fonction d'assistance à la conduite en fonction de l'état d'intégrité des signaux GNSS actuellement disponibles et/ou l'utilisation (23) des signaux GNSS actuellement disponibles pour commander la fonction d'assistance à la conduite en fonction de leur état d'intégrité ;
**caractérisé en ce que** la table de correspondance
- associe des combinaisons de plusieurs plages d'indicateurs de qualité des signaux définies par les valeurs seuils à l'un d'un ensemble d'états nominaux ; et
- attribue un état d'intégrité des signaux à chacun des états nominaux.

8. Logiciel comprenant des instructions qui, lorsque le logiciel est exécuté par une unité de traitement, amènent celle-ci à exécuter un procédé (2) selon la revendication 7.

9. Support de stockage lisible par ordinateur comprenant des instructions qui, lorsqu'elles sont exécutées par une unité de traitement, amènent celle-ci à exécuter un procédé (2) selon la revendication 7.
